# FASCICULE DE BREVET EUROPEEN

(11) **EP 2 395 460 B1**
(45) Date de publication et mention de la délivrance du brevet: **04.03.2015**
(21) Numéro de dépôt: 11169241.4
(22) Date de dépôt: 09.06.2011
(51) Int. Cl.: G06Q 20/34, G06K 19/077, G06K 19/07

(54) **Carte à microcircuit à indicateur de sélection et procédé mis en oeuvre dans une telle carte**
Mikrochipkarte mit Auswahlindikator, und Umsetzungsverfahren einer solchen Karte
Smart card with selection indicator light and implementation method in such a card

(30) Priorité: 11.06.2010 FR 1054646
(43) Date de publication de la demande: 14.12.2011
(60) Demande divisionnaire: 14193160.0
(73) Titulaire: Oberthur Technologies, 92700 Colombes (FR)
(72) Inventeur: Meslin, Jean-Marc, 95170 Deuil la Barre (FR)
(74) Mandataire: Santarelli

(56) Documents cités:
- WO-A1-99/16030
- WO-A1-03/001433
- US-A- 4 794 236
- US-A1- 2005 092 830

## Description

L'invention concerne une carte à microcircuit et un procédé mis en oeuvre dans une telle carte.

Il est bien connu d'utiliser les cartes à microcircuit comme support de données qu'un utilisateur pourra présenter pour pouvoir jouir de prérogatives attribuées au détenteur de la carte.

Dans ce contexte, la carte dialogue typiquement avec un terminal qui détermine, sur la base de données échangées avec la carte (originaire de la carte ou non, comme dans le cas d'un code fourni par l'utilisateur au terminal), si le porteur de carte (c'est-à-dire l'utilisateur) est autorisé à bénéficier des services concernés.

Une même carte à microcircuit peut par ailleurs être utilisée pour plusieurs applications, c'est-à-dire contenir des données qui rendent cette carte capable d'autoriser différents services à l'utilisateur.

L'application utilisée au cours d'une transaction donnée est sélectionnée par le terminal (en général suite à un choix de l'utilisateur, par exemple sur une interface utilisateur du terminal) ; la carte reçoit une information de sélection de l'application concernée et poursuit son fonctionnement dans le cadre de cette application.

Cette possibilité de fonctionner selon plusieurs applications peut toutefois se révéler complexe pour l'utilisateur, qui n'a d'ailleurs fréquemment pas connaissance de cette possibilité. Par exemple, lorsque l'utilisateur doit choisir sur un écran du terminal quelle application il souhaite utiliser, l'affichage est en général succinct et ne permet pas toujours de comprendre le fonctionnement de l'application concernée, ni d'entrevoir ses conséquences éventuelles, en particulier lorsque le terminal affiche des informations dans une langue étrangère à celle du porteur de la carte à microcircuit.

Dans ce cadre, l'invention propose une carte à microcircuit, caractérisée en ce qu'elle comprend un indicateur, des moyens de réception applications sont disponibles dans la carte : de la publication US 2005/092830, une carte multi-usages permettant à un utilisateur de choisir parmi plusieurs caractéristiques proposées par la carte ; et de la publication WO 99/16030, une carte à puce multi-applications stockant, dans une mémoire persistante, des informations indiquant quelle application doit être exécutée lors de la prochaine insertion de la carte à puce dans un terminal.

Dans ce cadre, l'invention propose une carte à microcircuit telle que définie dans la revendication 1. Cette carte à microcircuit comprend notamment un indicateur, des moyens de réception d'une information de sélection d'une application, et un microcontrôleur pour commander l'indicateur dans une première configuration lorsque l'information de sélection désigne une première application et dans une seconde configuration, distincte de la première configuration, lorsque l'information de sélection désigne une seconde application.

L'indicateur permet ainsi au porteur de la carte de connaître l'application utilisée, quelle que soit la nature du terminal et l'affichage que celui-ci offre.

Les moyens de réception sont aptes à recevoir une commande de sélection contenant l'information de sélection. La carte comprend des moyens d'échange de données avec un lecteur (par exemple une interface à contacts et/ou une interface sans contact). Ces moyens d'échange sont aptes à recevoir cette commande de sélection. Une telle commande, émise par le terminal, entraîne la poursuite du fonctionnement de la carte dans le cadre de l'application désignée par l'information de sélection.

Dans ce contexte, les moyens de réception font partie des moyens d'échange.

Selon un premier exemple de réalisation, le microcontrôleur est apte à commander l'indicateur dans la première ou la seconde configuration en fonction de l'information de sélection. C'est alors par exemple un microprocesseur de la carte qui commande directement l'indicateur dans la configuration associée à l'application.

Selon un second exemple de réalisation, les premières instructions sont aptes à commander l'indicateur dans la première configuration et les secondes instructions sont aptes à commander l'indicateur dans la seconde configuration.

La configuration est dans ce cas commandée pendant l'exécution de l'application concernée.

L'indicateur est par exemple un indicateur lumineux.

Dans ce cas, l'indicateur lumineux peut comprendre une première et une seconde source lumineuse ; on peut alors prévoir que, dans la première configuration, la première source lumineuse soit active et la seconde source lumineuse soit inactive, tandis que, dans la seconde configuration, la première source lumineuse soit inactive et la seconde source lumineuse soit active.

Les sources lumineuses sont par exemple des diodes électroluminescentes.

L'indicateur est typiquement situé sur une face de la carte portant au moins un contact électrique, à l'opposé dudit contact.

L'invention propose également un procédé mis en oeuvre dans une carte à microcircuit, tel que défini dans la revendication 8. Ce procédé comprend notamment les étapes suivantes :
- réception d'une information de sélection d'une application ;
- commande d'un indicateur dans une première configuration lorsque l'information de sélection désigne une première application et dans une seconde configuration, distincte de la première configuration, lorsque l'information de sélection désigne une seconde application.

L'étape de réception est réalisée par réception d'une commande de sélection contenant l'information de sélection.

La commande de sélection est reçue par (c'est-à-dire à travers) les moyens d'échange de la carte déjà mentionnés.

Selon un premier mode de réalisation, la commande de l'indicateur dans la première ou la seconde configuration est réalisée en fonction de l'information de sélection.

Selon un second mode de réalisation, l'indicateur est commandé dans la première configuration au cours de la mise en oeuvre de la première application et en ce que l'indicateur est commandé dans la seconde configuration au cours de la mise en oeuvre de la seconde application.

La commande de sélection précédemment mentionnée est par exemple une commande APDU SELECT conforme à la norme ISO 7816.

D'autres caractéristiques et avantages de l'invention apparaitront à la lumière de la description qui suit, faite en référence aux dessins annexés dans lesquels :
- la figure 1 représente un système comprenant un terminal recevant une carte à microcircuit ;
- la figure 2 montre la carte à microcircuit de la figure 1 en vue de dessus ;
- la figure 3 décrit les éléments principaux constituant la carte à microcircuit de la figure 2 ;
- la figure 4 représente un exemple de procédé mis en oeuvre au sein de la carte à microcircuit des figures 2 et 3 conformément aux enseignements de l'invention ;
- la figure 5 représente un exemple d'organisation d'une mémoire de la carte à microcircuit ;
- la figure 6 représente un autre exemple de procédé qui peut être mis en oeuvre au sein d'une carte à microcircuit conformément aux enseignements de l'invention ;
- la figure 7 représente un exemple d'organisation d'une mémoire dans le cadre du procédé représenté à la figure 6.

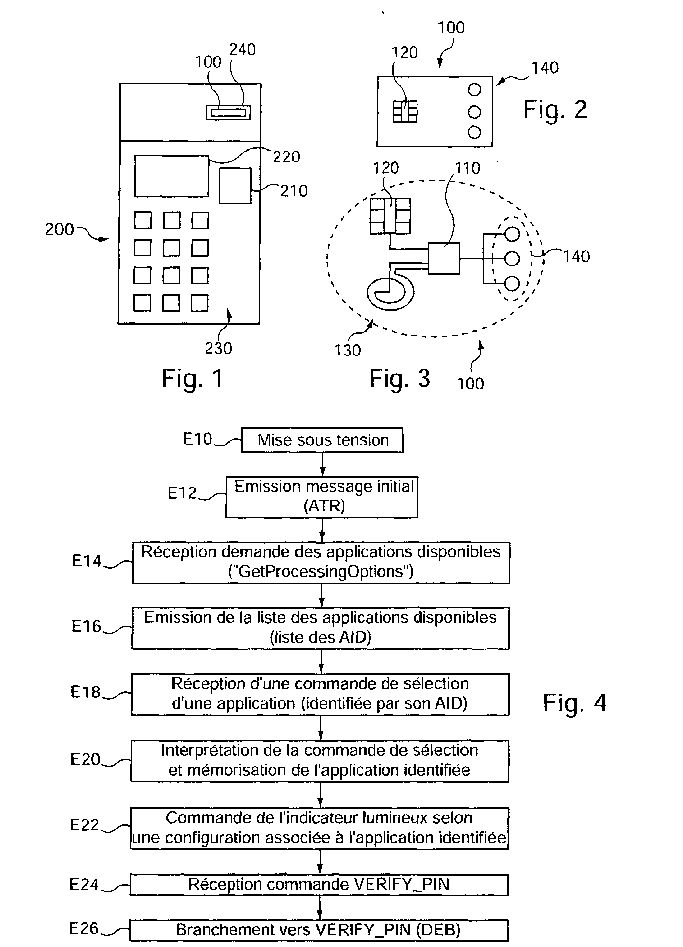

La **figure 1** illustre un exemple typique d'un contexte dans lequel est mise en oeuvre l'invention.

Un terminal 200 comprend une interface utilisateur formée d'un clavier 230 et d'un écran 220.

Le fonctionnement du terminal 200 est piloté par un microcontrôleur 210 (comprenant typiquement un microprocesseur et des mémoires utilisées par le microprocesseur) connecté (de manière non représentée) au clavier 230, à l'écran 220, ainsi qu'à un lecteur de carte à microcircuit 240.

On a représenté sur la figure 1 une carte à microcircuit 100 (du type décrit ci-après en référence aux figures 2 et 3) insérée dans le lecteur 240.

Comme visible en **figure 2****,** la carte à microcircuit 100 comprend une interface électrique à contacts (ou vignette) 120 destinée à coopérer avec des plots électriques du lecteur de carte 240 afin de permettre des échanges de données entre le terminal 200 (en particulier le microcontrôleur 210) et la carte 100 (en particulier son microcontrôleur 110 décrit plus bas).

La carte à microcircuit 100 présente par ailleurs sur sa face supérieure (c'est-à-dire sa face portant l'interface à contacts 120 déjà mentionnée) un indicateur lumineux formé ici de trois diodes électroluminescentes (ou LEDs) 140.

Dans le mode de réalisation décrit ici, les trois diodes de l'indicateur lumineux 140 sont alignées le long d'un bord de la carte 100 opposé au bord avoisinant l'interface à contacts 120. (Le bord au niveau duquel est situé le dispositif lumineux 140 et le bord voisin de l'interface à contacts 120 correspondent tous les deux aux petits côtés du rectangle formé par la carte à microcircuit 100 en projection dans le plan de sa face supérieure déjà mentionnée.)

Le lecteur de carte 240 reçoit dans une fente prévue à cet effet seulement une partie de la carte 100 insérée dans ce lecteur (la partie portant l'interface à contacts 120 qui vient alors coopérer avec les plots de connexion du lecteur 240 comme déjà indiqué) de telle sorte que l'indicateur lumineux 140 demeure à l'extérieur du lecteur 240, et est donc visible par l'utilisateur.

On remarque que l'on décrit ici un système dans lequel la carte à microcircuit 100 et le terminal 200 interagissent au moyen de contacts, par exemple conformément à la norme ISO7816. On pourrait prévoir en variante que la carte à microcircuit 100 et le terminal 200 interagissent au moyen d'une interface sans contact (notamment celle présentée en **figure 3** et décrite plus bas dans la carte à microcircuit 100).

De même, l'exemple de réalisation décrit ici utilise un indicateur lumineux, mais on pourrait en variante utiliser un indicateur sonore.

Les éléments principaux du fonctionnement électrique de la carte à microcircuit 100 sont représentés en **figure 3****.**

L'interface à contacts 120 déjà décrite est reliée à un microcontrôleur 110 formé d'un microprocesseur, d'une mémoire morte (ou ROM) et d'une mémoire réinscriptible (typiquement une EEPROM).

La carte à microcircuit peut comme déjà indiqué inclure une interface sans contact 130, comprenant notamment une antenne, et reliée dans ce cas au microcontrôleur 110.

La carte à microcircuit 100 comprend enfin l'indicateur lumineux 140 déjà mentionné ; cet indicateur lumineux 140 est relié au microcontrôleur 110 de sorte que le microprocesseur du microcontrôleur 110 peut commander la mise sous tension ou hors tension des différentes diodes formant l'indicateur (et donc l'émission ou non de lumière par chacune des diodes) selon plusieurs configurations.

L'indicateur lumineux 140 est alimenté (lorsque le microcontrôleur 110 commande sa mise sous tension) au moyen de l'alimentation fournie à la carte par le terminal (soit par l'interface à contact 120, soit par l'interface sans contact 130) comme expliqué plus loin.

La **figure 4** représente un premier exemple de procédé mis en oeuvre au sein de la carte à microcircuit 100 lorsqu'elle est insérée dans le lecteur 240 et conformément aux enseignements de l'invention.

L'insertion de la carte 100 dans le lecteur 240 permet tout d'abord la mise sous tension des éléments de la carte à microcircuit 100, et notamment du microcontrôleur 110 (étape E10). En effet, la carte à microcircuit 100 décrite ici ne possède aucune alimentation interne et ce n'est qu'après connexion au terminal 240 que ses éléments électriques sont alimentés.

On remarque que dans la variante où la communication entre le terminal 200 et la carte à microcircuit 100 est réalisée sans contact, au moyen de l'interface sans contact 130, la carte à microcircuit 100 est téléalimentée par le terminal 200 (qui fait alors office de lecteur).

Après sa mise sous tension, la carte à microcircuit 100 est initialisée et émet (pour signaler sa présence et son fonctionnement correct) un message initial prédéterminé, généralement connu sous le nom d"'*Answer To Reset*" ou ATR (étape E12).

Lorsqu'il reçoit ce message initial de la carte à microcircuit 100, le terminal 200 (c'est-à-dire principalement son microcontrôleur 210 via le lecteur 240) adresse une requête destinée à la carte en vue de recevoir une liste des applications disponibles sur cette carte (commande "*Get Processing Options*")*.*

La carte à microcircuit 100 (c'est-à-dire son microcontrôleur 110) reçoit à l'étape E14 cette requête et y répond en émettant à l'étape E16 une liste des applications disponibles à destination du terminal 200.

Cette liste est formée d'identifiants standardisés (et donc prédéterminés) des différentes applications disponibles sur la carte. De tels identifiants sont par exemple les AID couramment utilisés (AID signifiant *"Application Identifier*")*.*

Le terminal 200 reçoit la liste des applications disponibles sur la carte (c'est-à-dire la liste des AID).

Selon un exemple possible de mise en oeuvre, le terminal 200 affiche alors sur son écran 220 une liste de possibilités correspondant chacune à une application disponible sur la carte, conformément à ce qu'indique la liste d'applications reçues de la carte 100.

L'utilisateur peut ainsi sélectionner à l'aide du clavier 230 quelle application il souhaite utiliser.

Selon un autre exemple possible de mise en oeuvre, le terminal procède au choix de l'application à utiliser sans solliciter l'utilisateur. Ce peut être le cas notamment lorsque, parmi les applications disponibles telles que listées dans la liste reçue de la carte à microcircuit 100, seule une application peut être mise en oeuvre par le terminal concerné. Le choix se porte alors automatiquement sur cette application.

Dans tous les cas, le terminal 200 émet ensuite une commande de sélection de l'application choisie (soit par l'utilisateur, soit automatiquement par le terminal 200). Cette commande de sélection est par exemple une commande "Select".

La carte à microcircuit 100 reçoit ainsi à l'étape E18 une commande de sélection d'une application identifiée par l'identifiant AID contenu dans cette commande de sélection.

Le microcontrôleur 110 procède alors à l'étape E20 à l'interprétation de cette commande de sélection et mémorise, par exemple dans la mémoire vive du microcontrôleur 110, l'application identifiée, c'est-à-dire celle sélectionnée au niveau du terminal.

Cette mémorisation est par exemple réalisée en écrivant, à une adresse donnée de la mémoire réinscriptible, l'adresse (DEB ou CRED dans l'exemple décrit ici) à partir de laquelle les instructions de mise en oeuvre de l'application concernée sont mémorisées en mémoire morte (ou, en variante, dans la mémoire réinscriptible).

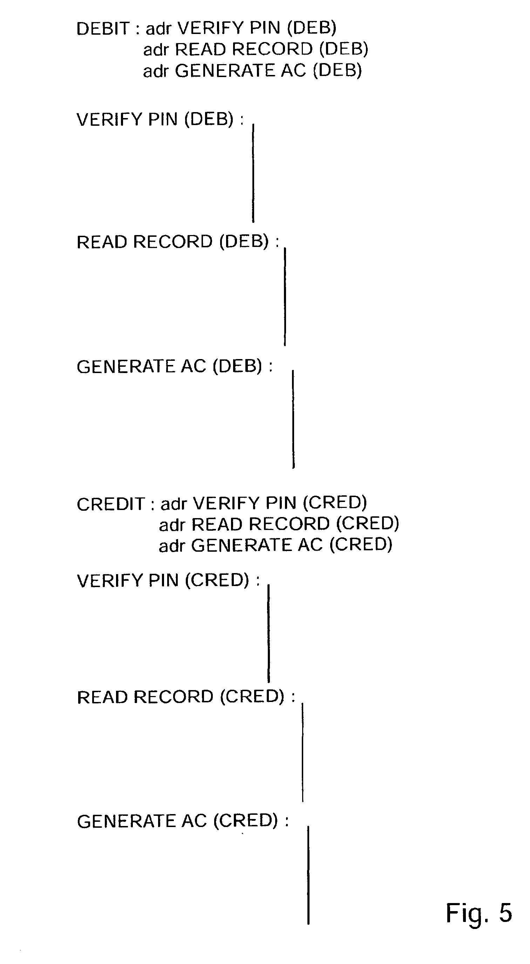

Ainsi, selon par exemple que l'application choisie est une application de débit ou une application de crédit, le microcontrôleur 110 commandera l'écriture en mémoire réinscriptible soit de l'adresse DEBIT, soit de l'adresse CREDIT, où résident respectivement comme montré en **figure 5** les instructions nécessaires à l'exécution des diverses commandes (par exemple VERIFY PIN, READ RECORD, GENERATE AC) susceptibles d'être mises en oeuvre au cours du déroulement de l'application concernée.

Le microcircuit 110 commande par ailleurs l'indicateur lumineux 140 selon une configuration associée à l'application identifiée (étape E22). Par exemple, le microcircuit 110 commande la mise sous tension d'une diode électroluminescente de couleur verte lorsque l'application sélectionnée (identifiée par l'identifiant AID) est une application de débit (les autres diodes étant alors hors tension) et met sous tension une diode électroluminescente de couleur bleue si l'application sélectionnée est une application de crédit (les autres diodes étant hors tension).

On remarque que les couleurs des diodes électroluminescentes qui viennent d'être indiquées peuvent être obtenues en ajoutant un filtre coloré sur la diode concernée.

On peut prévoir que le microcontrôleur 110 commande l'indicateur 140 comme décrit ci-dessus conformément à une information mémorisée en mémoire réinscriptible et associant l'application et la configuration de l'indicateur souhaitée pour cette application. Cette information peut être inscrite dans la mémoire lors de la personnalisation de la carte à microcircuit.

Les échanges de données entre le terminal 200 et la carte à microcircuit 100 se poursuit ensuite par l'émission de commandes du terminal 200 à destination de la carte à microcircuit 100.

Par exemple, la carte à microcircuit 100 reçoit une commande VERIFY PIN à l'étape E24. Le microcircuit du microcontrôleur 110 lit alors dans la mémoire réinscriptible, l'adresse mémorisée précédemment (par exemple DEBIT), puis lit, au niveau de cette adresse DEBIT, l'adresse VERIFY PIN (DEB) à laquelle se situent les instructions de mise en oeuvre de la commande VERIFY PIN dans le cadre de l'application de débit, et provoque enfin un saut à cette dernière adresse VERIFY PIN (DEB) afin de mettre en oeuvre ces instructions (étape E26).

On comprend que l'activation de l'indicateur 140 selon une configuration associée à l'application sélectionnée permet à l'utilisateur d'avoir en permanence un retour sur l'application effectivement utilisée et par exemple de stopper la transaction si une application non souhaitée est utilisée par le terminal 200.

On peut prévoir par ailleurs que la carte à microcircuit présente des inscriptions à proximité de chaque diode électroluminescente de manière à expliciter la signification de la mise sous tension de la diode électroluminescente située au voisinage immédiat de l'inscription concernée.

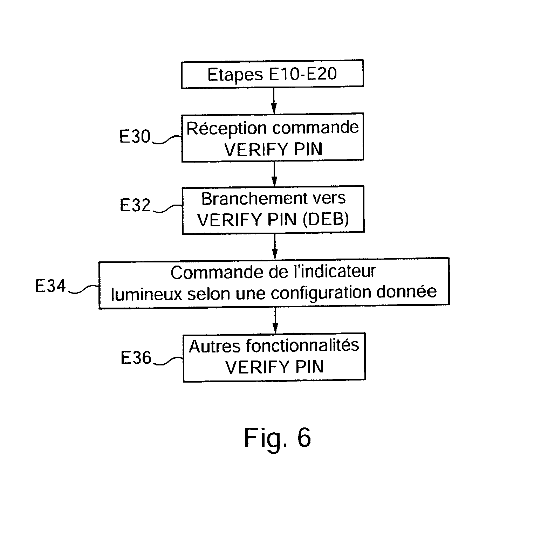

La **figure 6** représente les étapes d'un second exemple de procédé qui peut être mis en oeuvre au sein de la carte à microcircuit 100 conformément aux enseignements de l'invention.

Ce procédé débute par des étapes E10 à E20 identiques à celles déjà décrites en référence à la figure 4 et qui ne seront donc pas décrites à nouveau.

On remarque par contre que le procédé de la figure 6 ne comprend pas l'étape E22 de commande de l'indicateur lumineux en fonction de l'application identifiée.

Le processus de la figure 6 poursuit donc après l'étape E20 par la réception d'une commande provenant du terminal 200, par exemple la commande VERIFY PIN (étape E30).

Comme dans le cas de la figure 4, le microcontrôleur 110 lit l'adresse de l'application précédemment sélectionnée, par exemple l'adresse DEB.

A cette adresse DEB (ici en mémoire morte), le microcontrôleur 110 lit l'adresse VERIFY PIN (DEB) au niveau de laquelle sont mémorisées les instructions relatives à la commande VERIFY PIN dans le cadre de l'application de débit.

Le microcontrôleur 110 saute alors à cette dernière adresse, c'est-à-dire qu'il exécute les instructions listées à partir de cette adresse VERIFY PIN (DEB) à l'étape E32.

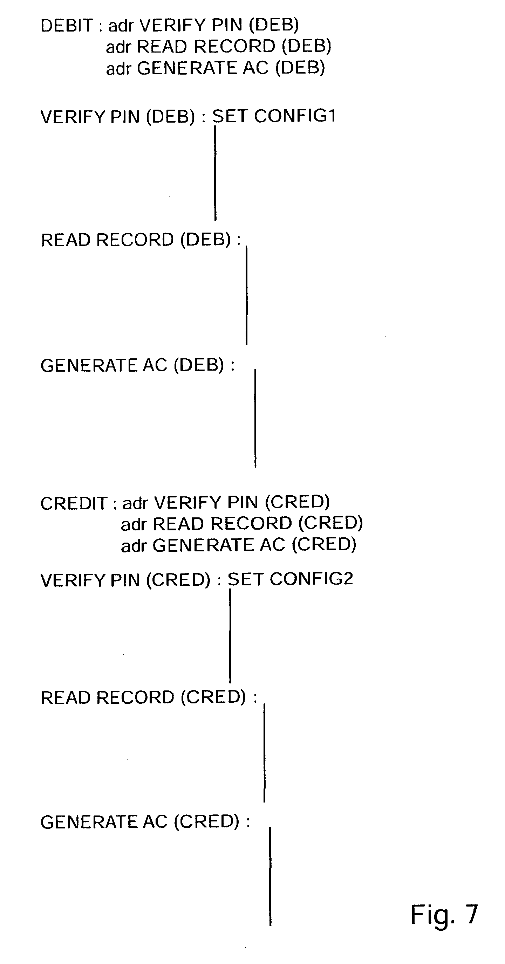

Comme visible en **figure 7****,** ces instructions comprennent notamment des instructions de commande de l'indicateur lumineux 140 dans une configuration donnée (dénommée CONFIG1 en figure 7) à l'étape E34.

Le microcontrôleur 110 poursuit ensuite l'exécution d'autres instructions mémorisées à partir de l'adresse VERIFY PIN (DEB) afin de mettre en oeuvre les autres fonctionnalités de cette commande, notamment en l'occurrence la vérification du code personnel d'identification (ou PIN) associé à l'utilisateur.

On prévoit comme visible en figure 7 que des instructions de commande de l'indicateur lumineux selon une autre configuration (configuration CONFIG2 en figure 7) soient insérées au sein des instructions relatives à au moins une commande mise en oeuvre dans le cadre d'une autre application (ici une application de crédit).

Ainsi, du fait de l'exécution de la commande concernée, l'indicateur lumineux a une configuration qui dépend de l'application dans le cadre de laquelle la commande est mise en oeuvre, ce qui permet à l'utilisateur de savoir quelle application est utilisée, comme dans le cadre du premier exemple décrit en référence à la figure 4.

Comme pour la premier mode de réalisation, on peut prévoir que le microcontrôleur 110 commande l'indicateur 140 comme décrit ci-dessus conformément à une information mémorisée en mémoire réinscriptible et associant l'application et la configuration de l'indicateur souhaitée pour cette application. Cette information peut être inscrite dans la mémoire lors de la personnalisation de la carte à microcircuit.

Les exemples qui précèdent ne sont que des modes possibles de mise en oeuvre de l'invention.

## Revendications

1. Carte à microcircuit (100), comprenant des moyens d'échange (120 ; 130) de données avec un lecteur (240), ces moyens d'échange de données comprenant des moyens de réception d'une commande de sélection suivie d'une deuxième commande, la commande de sélection contenant une information de sélection d'une application parmi une première application et une seconde application, ladite carte à microcircuit (100) étant **caractérisée en ce qu'**elle comprend en outre :
- un indicateur (140) ;
- un microcontrôleur (110) configuré pour commander l'indicateur dans une première configuration lorsque l'information de sélection désigne la première application et dans une seconde configuration, distincte de la première configuration, lorsque l'information de sélection désigne la seconde application ;
le microcontrôleur (110) étant configuré pour, en réponse à la réception de la deuxième commande, mettre en oeuvre des premières instructions lorsque l'information de sélection désigne la première application, ou des secondes instructions lorsque l'information de sélection désigne la seconde application.

2. Carte à microcircuit (100) selon la revendication 1, dans laquelle le microcontrôleur (110) est apte à commander l'indicateur dans la première ou la seconde configuration en fonction de l'information de sélection.

3. Carte à microcircuit (100) selon la revendication 1, dans laquelle les premières instructions sont aptes à commander l'indicateur dans la première configuration et dans laquelle les secondes instructions sont aptes à commander l'indicateur dans la seconde configuration.

4. Carte à microcircuit (100) selon l'une des revendications 1 à 3, dans laquelle l'indicateur (140) est un indicateur lumineux.

5. Carte à microcircuit (100) selon la revendication 4, dans laquelle l'indicateur lumineux (140) comprend une première et une seconde source lumineuses, dans laquelle, dans la première configuration, la première source lumineuse est active et la seconde source lumineuse est inactive, et dans laquelle, dans la seconde configuration, la première source lumineuse est inactive et la seconde source lumineuse est active.

6. Carte à microcircuit (100) selon la revendication 5, dans laquelle les sources lumineuses (140) sont des diodes électroluminescentes.

7. Carte à microcircuit (100) selon l'une des revendications 1 à 6, dans laquelle l'indicateur (140) est situé sur une face de la carte (100), à l'opposé d'au moins un contact électrique de la carte.

8. Procédé mis en oeuvre dans une carte à microcircuit (100) comprenant des moyens d'échange (120 ; 130) de données avec un lecteur (240), le procédé comprenant la réception (E18 ; E24 ; E30) par les moyens d'échange (120 ; 130) de données, d'une commande de sélection suivie d'une deuxième commande, la commande de sélection contenant une information de sélection d'une application parmi une première application et une seconde application ;
**caractérisé en ce qu'**il comprend les étapes suivantes :
- commande (E22 ; E34) d'un indicateur (140) dans une première configuration lorsque l'information de sélection désigne la première application et dans une seconde configuration, distincte de la première configuration, lorsque l'information de sélection désigne la seconde application ;
- en réponse à la réception de la deuxième commande, mise en oeuvre (E26 ; E32, E34, E36) de premières instructions lorsque l'information de sélection désigne la première application, ou de secondes instructions lorsque l'information de sélection désigne la seconde application.

9. Procédé selon la revendication 8, dans lequel la commande (E22 ;
E34) de l'indicateur (140) dans la première ou la seconde configuration est réalisée en fonction de l'information de sélection.

10. Procédé selon la revendication 8, dans lequel l'indicateur (140) est commandé dans la première configuration au cours de la mise en oeuvre de la première application et dans lequel l'indicateur (140) est commandé dans la seconde configuration au cours de la mise en oeuvre de la seconde application.

11. Carte à microcircuit (100) selon l'une des revendications 1 à 7, dans laquelle la première application est une application de débit et la deuxième application est une application de crédit.

12. Carte à microcircuit (100) selon l'une des revendications 1 à 7 et 11, configurée pour recevoir, du lecteur (240), une requête des applications disponibles sur la carte à microcircuit et pour y répondre, préalablement à la réception de la commande de sélection, en émettant une liste formée d'identifiants des applications disponibles sur la carte à microcircuit (100).

13. Carte à microcircuit (100) selon l'une des revendications 1 à 7 et 11 à 12, dans laquelle la commande de sélection est une commande SELECT conforme à la norme ISO 7816.

14. Carte à microcircuit (100) selon l'une des revendications 1 à 7 et 11 à 13, comprenant une mémoire mémorisant lesdites premières et deuxièmes instructions.

15. Carte à microcircuit (100) selon la revendication 14, dans laquelle le microcontrôleur (110) est configuré pour écrire, à une adresse donnée d'une mémoire réinscriptible, une adresse mémoire à partir de laquelle résident lesdites premières instructions lorsque l'information de sélection désigne la première application ou lesdites deuxièmes instructions lorsque l'information de sélection désigne la seconde application; et
pour, en réponse à la réception de la deuxième commande, lire l'adresse mémoire écrite à l'adresse donnée, puis mettre en oeuvre les premières ou deuxième instructions en fonction de l'adresse mémoire lue.

16. Carte à microcircuit (100) selon la revendication 15, dans laquelle le microcontrôleur (110) est configuré pour lire, au niveau de l'adresse mémoire lue, une deuxième adresse mémoire à laquelle se situent les premières ou deuxièmes instructions de mise en oeuvre la deuxième commande reçue ; puis pour effectuer un saut à la deuxième adresse mémoire afin de mettre en oeuvre ces premières ou deuxièmes instructions.

## Patentansprüche

1. Mikroschaltungskarte (100), Austauschmittel (120; 130) von Daten mit einem Lesegerät (240) umfassend, wobei diese Datenaustauschmittel Empfangsmittel eines Auswahlbefehls gefolgt von einem zweiten Befehl umfassen, wobei der Auswahlbefehl eine Auswahlinformation einer Anwendung aus einer ersten Anwendung und einer zweiten Anwendung enthält, wobei die Mikroschaltungskarte (100) **dadurch gekennzeichnet ist, dass** sie darüber hinaus Folgendes umfasst:
- eine Anzeige (140);
- eine Mikrosteuerung (110), die dazu ausgestaltet ist, die Anzeige in einer ersten Konfiguration, wenn die Auswahlinformation die erste Anwendung bezeichnet, und in einer zweiten Konfiguration zu steuern, die von der ersten Konfiguration verschieden ist, wenn die Auswahlinformation die zweite Anwendung bezeichnet;
wobei die Mikrosteuerung (110) dazu ausgestaltet ist, als Antwort auf den Empfang des zweiten Befehls, erste Anweisungen, wenn die Auswahlinformation die erste Anwendung bezeichnet, oder zweite Anweisungen zu verwenden, wenn die Auswahlinformation die zweite Anwendung bezeichnet.

2. Mikroschaltungskarte (100) nach Anspruch 1, wobei die Mikrosteuerung (110) dazu eingerichtet ist, die Anzeige in der ersten oder der zweiten Konfiguration in Abhängigkeit von der Auswahlinformation zu steuern.

3. Mikroschaltungskarte (100) nach Anspruch 1, wobei die ersten Anweisungen dazu eingerichtet sind, die Anzeige in der ersten Konfiguration zu steuern und wobei die zweiten Anweisungen dazu eingerichtet sind, die Anzeige in der zweiten Konfiguration zu steuern.

4. Mikroschaltungskarte (100) nach einem der Ansprüche 1 bis 3, wobei die Anzeige (140) aus einer Leuchtanzeige besteht.

5. Mikroschaltungskarte (100) nach Anspruch 4, wobei die Leuchtanzeige (140) eine erste und eine zweite Leuchtquelle umfasst, wobei die erste Leuchtquelle in der ersten Konfiguration aktiv ist und die zweite Leuchtquelle inaktiv ist, und wobei die erste Leuchtquelle in der zweiten Konfiguration inaktiv ist und die zweite Leuchtquelle aktiv ist.

6. Mikroschaltungskarte (100) nach Anspruch 5, wobei die Leuchtquellen (140) aus Elektrolumineszenzdioden bestehen.

7. Mikroschaltungskarte (100) nach einem der Ansprüche 1 bis 6, wobei die Anzeige (140) auf einer Seite der Karte (100) gegenüber mindestens einem elektrischen Kontakt der Karte angeordnet ist.

8. Verfahren, das in einer Mikroschaltungskarte (100) verwendet wird, die Austauschmittel (120; 130) von Daten mit einem Lesegerät (240) umfasst, wobei das Verfahren den Empfang (E18; E24; E30) durch die Austauschmittel (120; 130) von Daten eines Auswahlbefehls gefolgt von einem zweiten Befehl umfasst, wobei der Auswahlbefehl eine Auswahlinformation einer Anwendung aus einer ersten Anwendung und einer zweiten Anwendung enthält;
**dadurch gekennzeichnet, dass** es die folgenden Schritte umfasst:
- Befehlen (E22; E34) einer Anzeige (140) in einer ersten Konfiguration, wenn die Auswahlinformation die erste Anwendung bezeichnet, und in einer zweiten Konfiguration, die von der ersten Konfiguration verschieden ist, wenn die Auswahlinformation die zweite Anwendung bezeichnet;
- als Antwort auf den Empfang des zweiten Befehls, Verwenden (E26; E32, E34, E36) von ersten Anweisungen, wenn die Auswahlinformation die erste Anwendung bezeichnet, oder von zweiten Anweisungen, wenn die Auswahlinformation die zweite Anwendung bezeichnet.

9. Verfahren nach Anspruch 8, wobei der Befehl (E22;
E34) der Anzeige (140) in der ersten oder der zweiten Konfiguration in Abhängigkeit von der Auswahlinformation ausgeführt wird.

10. Verfahren nach Anspruch 8, wobei die Anzeige (140) in der ersten Konfiguration während der Verwendung der ersten Anwendung gesteuert wird und wobei die Anzeige (140) in der zweiten Konfiguration während der Verwendung der zweiten Anwendung gesteuert wird.

11. Mikroschaltungskarte (100) nach einem der Ansprüche 1 bis 7, wobei die erste Anwendung aus einer Belastungsanwendung besteht und die zweite Anwendung aus einer Gutschriftsanwendung besteht.

12. Mikroschaltungskarte (100) nach einem der Ansprüche 1 bis 7 und 11, die dazu ausgestaltet ist, von dem Lesegerät (240) eine Anforderung der auf der Mikroschaltungskarte verfügbaren Anwendungen zu empfangen und darauf, vor dem Empfang des Auswahlbefehls, zu antworten, indem eine Liste ausgegeben wird, die aus Kennzeichnungen der auf der Mikroschaltungskarte (100) verfügbaren Anwendungen ausgebildet ist.

13. Mikroschaltungskarte (100) nach einem der Ansprüche 1 bis 7 und 11 bis 12, wobei der Auswahlbefehl aus einem Befehl SELECT (AUSWÄHLEN) entsprechend der Norm ISO 7816 besteht.

14. Mikroschaltungskarte (100) nach einem der Ansprüche 1 bis 7 und 11 bis 13, einen Speicher umfassend, in dem die ersten und zweiten Anweisungen gespeichert werden.

15. Mikroschaltungskarte (100) nach Anspruch 14, wobei die Mikrosteuerung (110) dazu ausgestaltet ist, eine Speicheradresse an eine gegebene Adresse eines wiederbeschreibbaren Speichers zu schreiben, von der ausgehend die ersten Anweisungen, wenn die Auswahlinformation die erste Anwendung bezeichnet oder die zweiten Anweisungen ständig verfügbar sind, wenn die Auswahlinformation die zweite Anwendung bezeichnet; und
als Antwort auf den Empfang des zweiten Befehls,
die Speicheradresse zu lesen, die an die gegebene Adresse geschrieben wurde, danach die ersten oder zweiten Anweisungen in Abhängigkeit der gelesenen Speicheradresse zu verwenden.

16. Mikroschaltungskarte (100) nach Anspruch 15, wobei die Mikrosteuerung (110) dazu ausgestaltet ist, eine zweite Speicheradresse an der gelesenen Speicheradresse zu lesen, an der sich die ersten oder zweiten Anweisungen zur Verwendung des zweiten empfangenen Befehls befinden; danach einen Sprung zu der zweiten Speicheradresse auszuführen, um diese ersten oder zweiten Anweisungen zu verwenden.

## Claims

1. A microcircuit card (100) comprising exchanging means (120; 130) for exchanging data with a reader (240), these exchanging means for exchanging data comprising receiving means for receiving a selection command followed by a second command, the selection command containing an item of selection information of an application from among a first application and a second application, said microcircuit card (100) being **characterized in that** it further comprises:
- an indicator (140);
- a microcontroller (110) configured to command the indicator into a first configuration when the item of selection information designates the first application and into a second configuration, distinct from the first configuration, when the item of selection information designates the second application;
the microcontroller (110) being configured to, in response to the reception of the second command, implement first instructions when the item of selection information designates the first application, or second instructions when the item of selection information designates the second application.

2. A microcircuit card (100) according to claim 1, wherein the microcontroller (110) is adapted to command the indicator into the first or the second configuration according to the item of selection information.

3. A microcircuit card (100) according to claim 1, wherein the first instructions are adapted to command the indicator into the first configuration and wherein the second instructions are adapted to command the indicator into the second configuration.

4. A microcircuit card (100) according to one of claims 1 to 3, wherein the indicator (140) is a light-emitting indicator.

5. A microcircuit card (100) according to claim 4, wherein the light-emitting indicator (140) comprises a first and a second light sources, wherein, in the first configuration, the first light source is active and the second light source is inactive, and wherein, in the second configuration, the first light source is inactive and the second light source is active.

6. A microcircuit card (100) according to claim 5, wherein the light sources (140) are light-emitting diodes.

7. A microcircuit card (100) according to one of claims 1 to 6, wherein the indicator (140) is situated on a face of the card (100), on the opposite side of said face relative to at least one electrical contact of the card.

8. A method implemented in a microcircuit card (100) comprising exchanging means (120; 130) for exchanging data with a reader (240), the method comprising the reception (E18; E24; E30), by the exchanging means (120; 130) for exchanging data, of a selection command followed by a second command, the selection command containing an item of selection information from one application among a first application and a second application; **characterized in that** it comprises the following steps:
- commanding (E22; E34) an indicator (140) into a first configuration when the item of selection information designates the first application and into a second configuration, distinct from the first configuration, when the item of selection information designates the second application;
- in response to the reception of the second command, implementing (E26; E32, E34, E36) first instructions when the item of selection information designates the first application, or second instructions when the item of selection information designates the second application.

9. A method according to claim 8, wherein the command (E22; E34) of the indicator (140) into the first or the second configuration is carried out according to the item of selection information.

10. A method according to claim 8, wherein the indicator (140) is commanded into the first configuration during the implementation of the first application and wherein the indicator (140) is commanded into the second configuration during the implementation of the second application.

11. The microcircuit card (100) according to one of claims 1 to 7, wherein the first application is a debiting application and the second application is a crediting application.

12. The microcircuit card (100) according to one of claims 1 to 7 and 11, said card being configured to receive, from the reader (240), a request for applications available on the microcircuit card and to respond thereto, before the reception of the selection command, by sending a list formed from identifiers of the applications available on the microcircuit card (100).

13. The microcircuit card (100) according to one of claims 1 to 7 and 11 to 12, wherein the selection command is a SELECT command in accordance with the ISO 7816 standard.

14. The microcircuit card (100) according to one of claims 1 to 7 and 11 to 13, comprising a memory storing said first and second instructions.

15. The microcircuit card (100) according to claim 14, wherein the microcontroller (110) is configured to write, to a given address of a re-writable memory, a memory address from which said first instructions are located when the item of selection information designates the first application, or from which said second instructions are located when the item of selection information designates the second application; and
to read, in response to the reception of the second command, the memory address written to the given address, then to implement the first or second instructions depending on the read memory address.

16. The microcircuit card (100) according to claim 15, wherein the microcontroller (110) is configured to read, at the read memory address, a second memory address at which the first or second instructions for implementing the received second command are located; then to jump to the second memory address in order to implement these first or second instructions.
